(19) Europäisches Patentamt / European Patent Office / Office européen des brevets

(11) **EP 4 386 052 A1**

(12) **EUROPEAN PATENT APPLICATION**
published in accordance with Art. 153(4) EPC

(43) Date of publication:
**19.06.2024  Bulletin 2024/25**

(21) Application number: **22869311.5**

(22) Date of filing: **15.09.2022**

(51) International Patent Classification (IPC):
**C08L 77/06** *(2006.01)*    **C08K 3/34** *(2006.01)*
**C08K 3/04** *(2006.01)*

(52) Cooperative Patent Classification (CPC):
**C08K 3/04; C08K 3/34; C08L 77/06**

(86) International application number:
**PCT/CN2022/118970**

(87) International publication number:
**WO 2023/040943 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2021  CN 202111097912**

(71) Applicants:
• **Zhuhai Vanteque Specialty Engineering Plastics Co., Ltd.**
**Zhuhai City, Guangdong 519050 (CN)**
• **KINGFA SCI. & TECH. CO., LTD.**
**Guangzhou, Guangdong 510663 (CN)**

(72) Inventors:
• **YANG, Huixin**
**Zhuhai, Guangdong 519050 (CN)**

• **HUANG, Xianbo**
**Zhuhai, Guangdong 519050 (CN)**
• **MAI, Jiehong**
**Zhuhai, Guangdong 519050 (CN)**
• **JIANG, Sujun**
**Zhuhai, Guangdong 519050 (CN)**
• **JIANG, Zhiqiang**
**Zhuhai, Guangdong 519050 (CN)**
• **YAN, Kun**
**Zhuhai, Guangdong 519050 (CN)**
• **LI, Jianwei**
**Zhuhai, Guangdong 519050 (CN)**
• **XU, Xianjun**
**Zhuhai, Guangdong 519050 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **POLYAMIDE MOLDING COMPOSITE MATERIAL, AND PREPARATION METHOD THEREFOR AND APPLICATION THEREOF**

(57)    The present invention provides a semi-aromatic polyamide molding composite material that can be used for producing an LED display screen light source reflection support. Generally, by selecting a semi-aromatic polyamide resin having a specific repeating unit, and enabling the crystallization peak width at half maximum $\Delta T_{1/2}$ to be 4-11°C, the whiteness to be less than 26.5, the reflectivity under a 460 nm light source to be less than 6% etc., the semi-aromatic polyamide molding composite material has the advantages of reduced blue light, high contrast ratio and high gray scale, and can meet requirements for the packaging process and long-term reliability. The package product can be used for manufacturing high-contrast LED display screen light source refection supports for use in multiple environments.

EP 4 386 052 A1

Description

## TECHNICAL FIELD

The present invention belongs to the technical field of high polymer materials, and in particular to a polyamide molding composite material, a preparation method and use thereof.

## BACKGROUND

LED light source mainly consists of a semiconductor chip, an LED light source reflection support, gold wire, and a packaging adhesive. The LED light source reflection support is the "framework" of an LED light source, and also is a functional element. LED packaging process is to assemble other materials and components therein through die bonding, wire welding, and packaging adhesive cure. The LED reflection support needs to reflect the light emitted from an LED chip through a certain angle to reduce light loss, and to enable the light to transmit through packaging materials such as an epoxy resin or a silica gel, thus forming a light source for LED illumination or display. The LED reflection support material is a core material of LED illumination and directly concerns the performance and service life of the LED light source.

Several points need to be considered in the selection of the LED reflection support material at the present stage:

First, in the whole packaging process, the LED reflection support needs to be exposed at 150-200°C for 6-10 h; meanwhile, the packaged lamp beads need to be treated with a surface mount technology (SMT) when prepared to a display screen; the LED support or lamp bead is required to be free of deformation and free of damage under a load during the packaging or SMT process. Moreover, there is a higher demand for the tightness of the LED support material.

Second, in recent years, the LED display screen light source has gradually developed into a small-pitch display screen having a dot pitch of P2.5 below such that research & development and manufacturing of the LED display screen are unremittingly experiencing a great challenge. The small-pitch display screen support is gradually developed into thin wall, multi-mold cavity, and small size, which is more demanding for the mobility of the LED reflection support material, formability of the excessive mold cavities, mechanical strength, and the like.

Third, during use, the LED luminaire or display screen is often affected by severe weather such as high temperature, typhoon, rainstorm, thunder and lightning under different environment. To ensure luminaire or display screen safe and sound in severe weather, there is a higher demand for the dimensional stability of the materials used, and other performances.

Fourth, in the field of LED display application, to ensure the display image clear and keen, the display brightness and contrast ratio are very important indicators. Currently, the solution used on the market more is the LED support produced by the LED reflection support material; the support surface needs to be silk screen printed with black ink; the process is tedious, efficiency is affected and cost is high; however, the surfaces of its side and reflection cup are still white, which reduces the contrast ratio and gray scale displayed by the LED display screen.

Fifth, in terms of light source: on one hand, the wavelength capable of being perceived by ordinary people's eyes ranges within 780-400 nm. Short-wave blue ray having a wavelength of 400-450 nm causes the most serious extent of harm to retina; the blue ray at such a wavelength will increase the amount of toxins in the macular region of eyes, thereby seriously threatening people's eyes health. On the other hand, the light source of the LED full-color display screen consists of three chips, i.e. red (R), green (G), and blue (B), of which the brightness of the blue ray chip is the lowest, i.e., the contrast ratio is the highest. Therefore, the overall contrast ratio of the LED display screen will be directly affected by the reflectivity of chip-based blue ray. LED screen anti blue-ray has popularized to the LED screens of various mobile phones and TVs; ordinary means are to paint an anti-blue ray film on the surface of the screen, but the means has the shortcomings of weak film and high costs, respectively.

Those skilled in the art are mainly focused on the aforesaid first and second points in terms of the improvement of the LED reflection support material. Water absorption rate and size stability of the polyamide molding composite material are concerned less. Moreover, the contrast ratio and gray scale of the LED display screen support are not improved by improving the contrast ratio and gray scale of the material per se.

## SUMMARY

The objective of the present invention is to overcome the technical shortcomings, and to provide a semi-aromatic polyamide molding composite material; the present invention has a high contrast ratio and a high gray scale and thus, can meet the requirements for the packaging process and long-term reliability.

Another objective of the present invention is to provide use of the aforesaid semi-aromatic polyamide molding composite material.

The present invention is achieved by the following technical solution:

A semi-aromatic polyamide molding composite material includes the following components in parts by weight:

| | |
|---|---|
| PA10T/X resin | 40-75 parts; |
| wollastonite | 30-60 parts; and |
| toner | 0.5-4.5 parts; |

wherein based on a molar percentage of the PA10T/X, a 10T unit accounts for 80-95 mol% and an X unit accounts for 5-20 mol%, where the X unit consists of a diacid unit and a diamine unit; the diacid unit is selected from at least one of the group consisting of a terephthalic acid unit, an isophthalic acid unit, 1,6-hexanedioic acid, and a 1,10-decanedioic acid unit; the diamine unit is selected from at least one of the group consisting of a 1,6-hexamethylene diamine unit, a 1,9-nonamethylene diamine unit, a 2-methyl-1,5-pentenediamine unit, a 2-methyl-1,8-octyldiamine unit, a 1,10-diaminodecane unit, and a 1,12-dodecanediamine unit;

in a resin matrix of the semi-aromatic polyamide molding composite material, the wollastonite has an average diameter of 4-20 $\mu$m and an average length of 10-250 $\mu$m;

a crystallization peak width at half maximum $\Delta T_{1/2}$ of the semi-aromatic polyamide molding composite material is measured to be 4-11°C by differential scanning calorimetry at a cooling rate of 20°C/min after being heated up to 345°C; and wherein

the semi-aromatic polyamide molding composite material has a whiteness of less than 26.5 and a reflectivity of less than 6% under a 460 nm light source.

The X unit is not 10T.

The PA10T/X resin is selected from at least one of the group consisting of PA10T/10I, PA10T/6T, PA10T/66, PA10T/1010, PA10T/610, PA10T/612, and PA10T/12T.

Preferably, a crystallization peak width at half maximum $\Delta T_{1/2}$ of the semi-aromatic polyamide molding composite material is measured to be 5-8°C by differential scanning calorimetry at a cooling rate of 20°C/min after being heated up to 345°C.

The PA10T/X resin in the present invention may be a commercially available product, and also may be synthesized by the following method. To achieve more precise experiment, the PA10T/X used in the examples and comparative examples of the present invention is a homemade sample; raw materials such as reactive monomers and end-capping reagents are commercially available products.

(1) Prepolymerization: polymerization monomers (diacid and diamine), an end-capping reagent benzoic acid and deionized water are added to a stainless steel high-pressure reactor provided with mechanical stirring. The reactor is vacuumized and replaced with $N_2$ for three times, and the mixture is heated up to 170-190°C at a heating rate of 4-6°C/min with stirring. After temperature is kept constant for 1-2 h, the mixture is heated up to 260-280°C at a heating rate of 1-3°C/min, and slowly stirred. Temperature is kept constant for 3-5 h such that the polymerization reaction is performed fully. After the constant temperature, the mixture is slowly heated up to 270-290°C, and water is drained off to get normal pressure. The drain valve is turned off after the pressure reduces to normal pressure. When the reaction is completed, the rector is cooled to room temperature, and material is discharged.

(2) Solid phase viscosification: the material prepared during the prepolymerization is added to a vacuum rotary blower with a rotational speed preset at 10-15 r/min and a vacuum degree preset at 25-35 Pa. The material is heated up to 260-270°C at a rate of 15-25°C/min, samples are then taken and tested to obtain a viscosity, and the discharging end point is determined according to the viscosity (or number-average molecular weight).

The PA10T/X resin has a number-average molecular weight of 1,500-28,000. The number-average molecular weight is tested by a conventional method, specifically as follows: the number-average molecular weight (Mn) of the PA10T/X resin sample is determined by gel permeation chromatography (GPC). Agilent HPLC-1260 high performance liquid chromatograph, preparation: Eppendorf column oven, Shodex KF-801, 802, 802.5 and 803 GPC columns, differential detector, and G7129A automatic sampler. The molecular weight of the resin is determined at a column temperature of 40°C using hexafluoroisopropanol as a mobile phase. Data is processed using the cirrus software of a chromatographic work station to obtain the number-average molecular weight distribution Mn.

Preferably, in the resin matrix of the semi-aromatic polyamide molding composite material, the wollastonite has an average diameter of 6-13 $\mu$m and an average length of 80-120 $\mu$m. Wollastonite is a kind of powder having a certain length-to-diameter ratio, and its length and diameter almost keep the same during the shear melting process of a screw; its microstructure is fibrous. Experiments show that two substances, PA10T and wollastonite (average diameter of 17

μm and average length of 180 μm) are blended by a shear melting process, and then the resin is dissolved out with a solvent; average diameter and average length of wollastonite are tested. It has been found that the diameter of wollastonite is kept the same and its average length changes about 0.5% during the shear process of the screw.

The toner is at least one or a mixture of toners selected from the group consisting of a carbon black toner, a black toner, and an amorphous carbon toner.

Preferably, the toner is selected from an amorphous carbon toner.

Preferably, the semi-aromatic polyamide molding composite material has the reflectivity of less than 4.5% under a 460 nm light source, and more preferably, the semi-aromatic polyamide molding composite material has the reflectivity of less than 3.8% under a 460 nm light source.

The semi-aromatic polyamide molding composite material further includes 0-3 parts of an antioxidant in part by weight; the antioxidant is selected from at least one of the group consisting of hindered phenol antioxidants, hindered amine antioxidants, phosphite ester antioxidants, mercaptan antioxidants, and thiodipropionate antioxidants.

The semi-aromatic polyamide molding composite material of the present invention is for use in preparing an LED display screen light source reflection support.

A method for preparing the semi-aromatic polyamide molding composite material of the present invention includes the following steps: adding components to a blender mixer for uniform mixing, extruding and pelleting the mixed components with a twin-screw extruder to obtain the semi-aromatic polyamide molding composite material, where the screw temperature ranges from 280°C to 330°C, and the revolving speed is 450 r/min.

The present invention has the following beneficial effects:

The reflectivity under a 460 nm light source is mainly correlated to the surface roughness (when the surface roughness of an object becomes larger within a certain range, the ray of light emitted from a light source will generate diffuse reflection on the surface of the object, and finally, the energy of the ray of light received on a receiving end is less) and whiteness of materials (the lower the whiteness is, the lower the reflectivity is). The effect of the LED display screen light source reflection support on the gray scale and contrast ratio of the LED display screen mainly lies in whiteness and reflectivity of the light source reflection support. Based on the principle, the semi-aromatic polyamide molding composite material of the present invention is to control the whiteness to be less than 26.5, and to control the reflectivity under a 460 nm light source to be less than 6% (to improve the gray scale and contrast ratio) through the following three aspects. Moreover, the semi-aromatic polyamide molding composite material of the present invention has the advantages of long-term packaging stability (tightness) and low blue ray of the LED screen packaged.

First, compared with other inorganic fillers, wollastonite enables the surface roughness of the semi-aromatic polyamide molding composite material workpiece to a reasonable range of reducing reflection of a 460 nm light, i.e., the reflectivity under a 460 nm light source is reduced; and meanwhile, the tightness with hardware is improved. The preferable size distribution of the wollastonite in the resin matrix can further reduce the reflectivity under a 460 nm light source (to reduce the blue ray of the LED display screen), and improve its tightness with hardware.

Second, the color of material is adjusted with a toner to obtain the black with good light absorption effect; preferably, the amorphous carbon toner can further reduce the whiteness and improve the light absorption, thereby reducing the reflectivity under a 460 nm light source.

Third, through experimental findings, the crystallization peak width at half maximum of the semi-aromatic polyamide molding composite material also will obviously affect the reflectivity under a 460 nm light source of the composite material; when the crystallization peak width at half maximum $\Delta T_{1/2}$ of the composite material is 4-11°C, the surface of the prepared workpiece has a low reflectivity under a 460 nm light source. In the technical solution of the present invention, the crystallization peak width at half maximum of the semi-aromatic polyamide molding composite material is mainly adjusted by the amount and specification of the toner and wollastonite added, and also can be obtained by adjusting the number-average molecular weight of the semi-aromatic polyamide resin. On the other hand, the excellent tightness is achieved by adjusting the crystallization peak width at half maximum of the PA10T/X molding composite material, the specification of the wollastonite, and surface roughness.

The semi-aromatic polyamide molding composite material of the present invention has no need for painting a light-absorbing paint or matting additionally, and thus reduces the cost of the LED display screen light source support.

## DETAILED DESCRIPTION OF EMBODIMENTS

The present invention will be further described with reference to the detailed examples. The following examples will help those skilled in that art further understand the present invention, but are not construed as limiting the scope of the present invention in any form. It should be indicated that those skilled in the art can further make several deformations and improvements in the premise of not departing from the inventive concept. These all fall within the protection scope of the present invention.

Raw materials used in the examples and comparative examples are as follows:

Monomers used in the polymerization of the following polyamides are commercially available products which are polymerized pure.

PA10T/1010-1: a 10T unit content of 80 mol%, a number-average molecular weight of 7,500 and a crystallization peak width at half maximum $\Delta T_{1/2}$ of 15.1°C. It was homemade referring to the method of the summary of the present invention;

PA10T/1010-2: a 10T unit content of 85 mol%, a number-average molecular weight of 9,000 and a crystallization peak width at half maximum $\Delta T_{1/2}$ of 16°C. It was homemade referring to the method of the summary of the present invention;

PA10T/1010-3: a 10T unit content of 90 mol%, a number-average molecular weight of 8,500 and a crystallization peak width at half maximum $\Delta T_{1/2}$ of 12.8°C. It was homemade referring to the method of the summary of the present invention;

PA10T/1010-4: a 10T unit content of 95 mol%, a number-average molecular weight of 13,000 and a crystallization peak width at half maximum $\Delta T_{1/2}$ of 8.4°C. It was homemade referring to the method of the summary of the present invention;

PA10T/1010-5: a 10T unit content of 90 mol%, a number-average molecular weight of 4300 and a crystallization peak width at half maximum $\Delta T_{1/2}$ of 14.2°C. It was homemade referring to the method of the summary of the present invention;

PA10T/1010-6: a 10T unit content of 90 mol%, a number-average molecular weight of 21,000 and a crystallization peak width at half maximum $\Delta T_{1/2}$ of 18.3°C. It was homemade referring to the method of the summary of the present invention;

PA10T/1010-7: a 10T unit content of 75 mol%, a number-average molecular weight of 8,800 and a crystallization peak width at half maximum $\Delta T_{1/2}$ of 18.0°C. It was homemade referring to the method of the summary of the present invention;

PA10T/1010-8: a 10T unit content of 97 mol%, a number-average molecular weight of 8,000 and a crystallization peak width at half maximum $\Delta T_{1/2}$ of 7.5°C. It was homemade referring to the method of the summary of the present invention;

PA10T/10I-1: a 10T unit content of 80 mol%, a number-average molecular weight of 10,500 and a crystallization peak width at half maximum $\Delta T_{1/2}$ of 17.1°C. It was homemade referring to the method of the summary of the present invention;

PA10T/10I-2: a 10T unit content of 85 mol%, a number-average molecular weight of 9,800 and a crystallization peak width at half maximum $\Delta T_{1/2}$ of 12°C. It was homemade referring to the method of the summary of the present invention;

PA10T/10I-3: a 10T unit content of 90 mol%, a number-average molecular weight of 8,500 and a crystallization peak width at half maximum $\Delta T_{1/2}$ of 8.3°C. It was homemade referring to the method of the summary of the present invention;

PA10T/10I-4: a 10T unit content of 95 mol%, a number-average molecular weight of 8,000 and a crystallization peak width at half maximum $\Delta T_{1/2}$ of 7.1°C. It was homemade referring to the method of the summary of the present invention;

PA10T/10I-5: a 10T unit content of 60 mol%, a number-average molecular weight of 8,000 and a crystallization peak width at half maximum $\Delta T_{1/2}$ of 15°C. It was homemade referring to the method of the summary of the present invention;

PA10T/66: a 10T unit content of 90 mol%, a number-average molecular weight of 8,000 and a crystallization peak width at half maximum $\Delta T_{1/2}$ of 13.4°C. It was homemade referring to the method of the summary of the present invention;

PA10T/12T: a 10T unit content of 80 mol%, a number-average molecular weight of 8,000 and a crystallization peak width at half maximum $\Delta T_{1/2}$ of 10.6°C. It was homemade referring to the method of the summary of the present invention;

Wollastonite A: an average diameter of 4 $\mu$m and an average length of 60 $\mu$m;
Wollastonite B: an average diameter of 6 $\mu$m and an average length of 120 $\mu$m;
Wollastonite C: an average diameter of 13 $\mu$m and an average length of 80 $\mu$m; and
Wollastonite D: an average diameter of 17 $\mu$m and an average length of 180 $\mu$m.

The wollastonite used in the present invention was purchased commercially and screened to obtain the required ranges of the average diameter and average length.

Talc powder: AH-1250, Guangxi Longsheng Huamei Talc Development Co., Ltd.

Toner A: amorphous carbon toner N774, Tianjin Tianyang Qiushi Chemical Technology Co. LTD.
Toner B: carbon black M570, CABOT Chemical;

Toner C: Black UN2014, CABOT Chemical;
Toner D: Mazcol Blue 153K, Shenzhen Dingtai Chemical Co., LTD.
Antioxidant: Irganox1098, hindered phenol antioxidants.

Methods for preparing the semi-aromatic polyamide molding composite materials in examples and comparative examples: PA10T/X resin, wollastonite, toner and antioxidants were added to a blender mixer and mixed well, extruded and pelleted with a twin-screw extruder to obtain the semi-aromatic polyamide molding composite material, where the screw temperature ranged from 280°C to 330°C, and the revolving speed was 450 r/min.

Test method:

(1) Tightness: characterization of the tightness of the support plastic with hardware by red ink testing on the PA10T/X molding composite material sample: a LED reflector cup prepared by a LED display screen light source support material and an electroplating hardware strip in an injection in-molded manner was soaked with red ink to allow the pins to be submerged in the red ink, and placed to observe whether the red ink permeated into the interior of the reflector cup.

If the red ink did not permeate into the reflector cup within 5 min, the tightness grade was determined as level A;
if red ink did not permeate into the reflector cup within 3 min, but permeates within 5 min, the tightness grade was determined as level B;
if red ink did not permeate into the reflector cup within 1 min, but permeates within 3 min, the tightness grade was determined as level C;
if red ink permeates into the reflector cup within 1 min, the tightness grade was determined as level D; and
if the tightness grade was level D, the tightness between plastic and hardware was proved to be poor, which may lead to the risk of lamp bead failure. On the contrary, if the tightness grade was level A, B, or C, the packaged lamp bead has excellent gas tightness and good reliability.

(2) Whiteness: characterization of the contrast ratio of materials via its whiteness index: the PA10T molding composite material was injection molded to prepare a test piece having a length of 60 mm, a width of 60 mm, and a thickness of 1 mm. A Color Eye 7000A color difference meter was used to measure values L, a and b to calculate the whiteness:

$$W_H = 100 - [(100-L)^2 + a^2 + b^2]^{1/2}.$$

(3) Reflectivity: the PA10T/X molding composite material was injection molded to prepare a test piece having a length of 60 mm, a width of 60 mm, and a thickness of 1 mm. A Color Eye 7000A color difference meter was used to measure the reflectivity of the test piece to a 460 nm-wavelength light.

(4) Crystallization peak width at half maximum $\Delta T_{1/2}$ of the semi-aromatic polyamide molding composite material: the molding composite material was heated up to 345°C from 30°C at a rate of 20°C/min under nitrogen condition; after constant temperature was kept constant for 2 min, the material was cooled at a cooling rate of 20°C/min; the temperature of the crystallization peak emerging at this time was set as a crystallization temperature Tc (°C), and the temperature at an half of the peak width measured was set as a crystallization peak width at half maximum $\Delta T_{1/2}$.

Table 1: components (parts by weight) of the semi-aromatic polyamide molding composite materials and test results in Examples 1-6

| | Example 1 | Example 2 | Example 3 | Example 4 | Example 5 | Example 6 |
|---|---|---|---|---|---|---|
| PA10T/1010-1 | 60 | 60 | 60 | 60 | 60 | 60 |
| Wollastonite A | 30 | 35 | 40 | 45 | 50 | 60 |
| Toner A | 0.5 | 0.5 | 0.5 | 0.5 | 0.5 | 0.5 |
| Crystallization peak width at half maximum $\Delta T_{1/2}$, °C | 10.6 | 9.3 | 8.8 | 8.1 | 7.5 | 7.2 |

(continued)

| | Example 1 | Example 2 | Example 3 | Example 4 | Example 5 | Example 6 |
|---|---|---|---|---|---|---|
| Tightness grade | B | B | B | B | A | A |
| Whiteness | 26.03 | 25.77 | 25.28 | 24.67 | 24.01 | 24.32 |
| Reflectivity, % | 5.89 | 5.44 | 4.91 | 4.30 | 3.81 | 3.92 |

As can be seen from Examples 1-6, when the crystallization peak width at half maximum of the semi-aromatic polyamide molding composite material is controlled within the preferable range by adjusting the amount of the wollastonite added, the tightness grade is higher and the reflectivity is low.

Table 2: components (parts by weight) of the semi-aromatic polyamide molding composite materials and test results in Examples 7-12

| | Example 7 | Example 8 | Example 9 | Example 10 | Example 11 | Example 12 |
|---|---|---|---|---|---|---|
| PA10T/1010-1 | 60 | 60 | 60 | 60 | 40 | 75 |
| Wollastonite A | 45 | 45 | 45 | 45 | 30 | 60 |
| Toner A | 1 | 1.3 | 1.8 | 0.5 | 1 | 4.5 |
| Toner D | | | | 0.8 | | |
| Crystallization peak width at half maximum $\Delta T_{1/2}$, °C | 8.0 | 8.0 | 8.0 | 8.1 | 7.9 | 7.7 |
| Antioxidant | | | | | | 0.5 |
| Tightness grade | B | B | B | B | A | A |
| Whiteness | 22.80 | 22.26 | 21.47 | 23.08 | 22.37 | 20.16 |
| Reflectivity, % | 3.36 | 2.94 | 2.61 | 3.15 | 3.08 | 2.35 |

As can be seen from Examples 4/7-10, whiteness and reflectivity are reduced by adjusting the amount of the toner used.

Table 3: components (parts by weight) of the semi-aromatic polyamide molding composite materials and test results in Examples 13-17

| | Example 13 | Example 14 | Example 15 | Example 16 | Example 17 |
|---|---|---|---|---|---|
| PA10T/1010-1 | 60 | 60 | 60 | 60 | 60 |
| Wollastonite A | | | | 45 | 45 |
| Wollastonite B | 45 | | | | |
| Wollastonite C | | 45 | | | |
| Wollastonite D | | | 45 | | |
| Toner A | 0.5 | 0.5 | 0.5 | | |
| Toner B | | | | 0.5 | |
| Toner C | | | | | 0.5 |
| Crystallization peak width at half maximum $\Delta T_{1/2}$, °C | 8.2 | 8.5 | 8.9 | 8.1 | 8.1 |
| Tightness grade | A | A | B | B | B |
| Whiteness | 24.28 | 24.05 | 24.48 | 24.89 | 25.33 |
| Reflectivity, % | 3.93 | 3.69 | 4.42 | 4.60 | 5.13 |

As can be seen from Examples 4/13-17, preferably, the wollastonite has an average diameter of 6-14 μm and an average length of 80-120 μm; even though the crystallization peak width at half maximum of the composite material is not within the range of 5-8°C, the tightness grade may be further increased and the reflectivity is reduced; the toner is preferably an amorphous carbon toner.

Table 4: components (parts by weight) of the semi-aromatic polyamide molding composite materials and test results in Examples 18-24

| | Example 18 | Example 19 | Example 20 | Example 21 | Example 22 | Example 23 | Example 24 |
|---|---|---|---|---|---|---|---|
| PA10T/1010-2 | 60 | | | | | | |
| PA10T/1010-3 | | 60 | | | | | |
| PA10T/1010-4 | | | 60 | | | | |
| PA10T/1010-5 | | | | 60 | | | |
| PA10T/1010-6 | | | | | 60 | | |
| PA10T/66 | | | | | | 60 | |
| PA10T/12T | | | | | | | 60 |
| Wollastonite A | 45 | 45 | 45 | 45 | 45 | 45 | 45 |
| Toner A | 0.5 | 0.5 | 0.5 | 0.5 | 0.5 | 0.5 | 0.5 |
| Crystallization peak width at half maximum $\Delta T_{1/2}$, °C | 8.7 | 6.7 | 4.2 | 7.8 | 9.7 | 7.4 | 6.1 |
| Tightness grade | B | A | B | A | B | A | A |
| Whiteness | 24.97 | 23.77 | 24.38 | 23.48 | 24.50 | 23.62 | 23.50 |
| Reflectivity, % | 4.42 | 3.96 | 4.55 | 3.78 | 4.33 | 3.85 | 3.67 |

As can be seen from Examples 4/18-24, by adjusting wollastonite and toner, the semi-aromatic polyamide resin having different initial crystallization peak widths at half maximum enables the crystallization peak width at half maximum to be within different ranges, thus obtaining semi-aromatic polyamide molding composite materials having different tightness grades and reflectivity.

Table 5: components (parts by weight) of the semi-aromatic polyamide molding composite materials and test results in Examples 23-26

| | Example 23 | Example 24 | Example 25 | Example 26 |
|---|---|---|---|---|
| PA10T/10I-1 | 60 | | | |
| PA10T/10I-2 | | 60 | | |
| PA10T/10I-3 | | | 60 | |
| PA10T/10I-4 | | | | 60 |
| Wollastonite A | 45 | 45 | 45 | 45 |
| Toner A | 0.5 | 0.5 | 0.5 | 0.5 |
| Crystallization peak width at half maximum $\Delta T_{1/2}$, °C | 8.9 | 6.6 | 4.3 | 4.1 |
| Tightness grade | B | A | B | B |
| Whiteness | 24.84 | 24.15 | 24.79 | 24.89 |
| Reflectivity, % | 4.29 | 3.80 | 4.32 | 4.41 |

Table 6: components (parts by weight) of the semi-aromatic polyamide molding composite materials and test results in Comparative Examples 1-6

| | Comparative Example 1 | Comparative Example 2 | Comparative Example 3 | Comparative Example 4 | Comparative Example 5 | Comparative Example 6 |
|---|---|---|---|---|---|---|
| PA10T/1010 -7 | 60 | | | | | |
| PA10T/1010 -8 | | 60 | | | | |
| PA10T/10I-5 | | | 60 | | | |
| PA10T/1010 -1 | | | | 60 | 60 | 60 |
| Wollastonite A | 45 | 45 | 45 | | 20 | 70 |
| Talc powder | | | | 45 | | |
| Toner A | 0.5 | 0.5 | 0.5 | 0.5 | 0.5 | 0.5 |
| Crystallizati on peak width at half maximum $\Delta T_{1/2}$, °C | 9.6 | 3.9 | 8.2 | 9.6 | 11.2 | 6.8 |
| Tightness grade | C | D | D | D | D | C |
| Whiteness | 26.90 | 24.81 | 30.14 | 28.49 | 27.84 | 27.40 |
| Reflectivity, % | 6.22 | 4.82 | 8.60 | 10.39 | 6.86 | 6.75 |

As can be seen from Comparative Examples 1/2/3, in the PA10T/X repeating unit, the X content significantly affects the tightness grade; due to the change of the surface property, the reflectivity also increases therewith, and the tightness is affected significantly.

As can be seen from Comparative Example 4, wollastonite may not be replaced by talc powder.

As can be seen from Comparative Example 5, too low content of wollastonite may not enable the crystallization peak width at half maximum to be adjusted to be 4-11°C; the tightness grade is not only poor, but also the reflectivity is high.

As can be seen from Comparative Example 6, even though the crystallization peak width at half maximum ranges from 4°C to 11°C, the tightness grade and reflectivity are poor when the content of wollastonite is excessive. This is because too much wollastonite damages the surface structure of the composite material; moreover, as wollastonite is a kind of white powder, too much amount may increase the whiteness on the contrary.

Table 7: components (parts by weight) of the semi-aromatic polyamide molding composite materials and test results in Comparative Examples 7-8

| | Comparative Example 7 | Comparative Example 8 |
|---|---|---|
| PA10T/1010-1 | 60 | 60 |
| Wollastonite A | 35 | 35 |
| Toner A | 0.2 | 5 |
| Crystallization peak width at half maximum $\Delta T_{1/2}$, °C | 9.3 | 9.0 |
| Tightness grade | B | C |
| Whiteness | 28.11 | 21.75 |
| Reflectivity, % | 6.41 | 6.50 |

As can be seen from Comparative Example 7, too low content of the toner may lead to a too high whiteness and a high reflectivity.

As can be seen from Comparative Example 8, too much toner added may lead to the enrichment of too much toner onto the surface, thereby affecting the tightness and reflectivity.

**Claims**

1.  A semi-aromatic polyamide molding composite material, comprising the following components in parts by weight:

    40-75 parts of PA10T/X resin;
    30-60 parts of wollastonite; and
    0.5-4.5 parts of toner;
    wherein based on a molar percentage of the PA10T/X, a 10T unit accounts for 80-95 mol% and an X unit accounts for 5-20 mol%; wherein the X unit consists of a diacid unit and a diamine unit; the diacid unit is selected from at least one of the group consisting of a terephthalic acid unit, an isophthalic acid unit, 1,6-hexanedioic acid, and a 1,10-decanedioic acid unit; the diamine unit is selected from at least one of the group consisting of a 1,6-hexamethylene diamine unit, a 1,9-nonamethylene diamine unit, a 2-methyl-1,5-pentenediamine unit, a 2-methyl-1,8-octyldiamine unit, a 1,10-diaminodecane unit, and a 1,12-dodecanediamine unit;
    in a resin matrix of the semi-aromatic polyamide molding composite material, the wollastonite has an average diameter of 4-20 $\mu$m and an average length of 10-250 $\mu$m;
    a crystallization peak width at half maximum $\Delta T_{1/2}$ of the semi-aromatic polyamide molding composite material is measured to be 4-11°C by differential scanning calorimetry at a cooling rate of 20°C/min after being heated up to 345°C; and wherein
    the semi-aromatic polyamide molding composite material has a whiteness of less than 26.5 and a reflectivity of less than 6% under a 460 nm light source.

2.  The semi-aromatic polyamide molding composite material according to claim 1, wherein the PA10T/X resin is selected from at least one of the group consisting of PA10T/10I, PA10T/6T, PA10T/66, PA10T/1010, PA10T/610, PA10T/612, and PA10T/12T.

3.  The semi-aromatic polyamide molding composite material according to claim 1, wherein the crystallization peak width at half maximum $\Delta T_{1/2}$ of the semi-aromatic polyamide molding composite material is measured to be 5-8°C by differential scanning calorimetry at a cooling rate of 20°C/min after being heated up to 345°C.

4.  The semi-aromatic polyamide molding composite material according to claim 1, wherein the PA10T/X resin has a number-average molecular weight of 1,500-28,000.

5.  The semi-aromatic polyamide molding composite material according to claim 1, wherein in the resin matrix of the semi-aromatic polyamide molding composite material, the wollastonite has the average diameter of 6-13 $\mu$m and the average length of 80-120 $\mu$m.

6.  The semi-aromatic polyamide molding composite material according to claim 1, wherein the toner is at least one or a mixture of toners selected from the group consisting of a carbon black toner, a black toner, and an amorphous carbon toner; preferably, the toner is selected from an amorphous carbon toner.

7.  The semi-aromatic polyamide molding composite material according to claim 1, wherein preferably, the semi-aromatic polyamide molding composite material has a reflectivity of less than 4.5%under a 460 nm light source, and more preferably, the semi-aromatic polyamide molding composite material has a reflectivity of less than 3.8%under a 460 nm light source.

8.  The semi-aromatic polyamide molding composite material according to claim 1, further comprising 0-3 parts of an antioxidant in part by weight.

9.  A method for preparing the semi-aromatic polyamide molding composite material according to any one of claims 1-8, comprising the following steps: adding the components to a blender mixer for uniform mixing, extruding and pelleting the mixed components with a twin-screw extruder to obtain the semi-aromatic polyamide molding composite material, wherein a screw temperature ranges from 280°C to 330°C, and a revolving speed ranges from 400 r/min to 500 r/min.

10. Use of the semi-aromatic polyamide molding composite material according to any one of claims 1-8 in preparing an LED display screen light source reflection support.

## INTERNATIONAL SEARCH REPORT

| International application No. |
| --- |
| **PCT/CN2022/118970** |

**A. CLASSIFICATION OF SUBJECT MATTER**

C08L 77/06(2006.01)i; C08K 3/34(2006.01)i; C08K 3/04(2006.01)i

According to International Patent Classification (IPC) or to both national classification and IPC

**B. FIELDS SEARCHED**

Minimum documentation searched (classification system followed by classification symbols)

C08L; C08K

Documentation searched other than minimum documentation to the extent that such documents are included in the fields searched

Electronic data base consulted during the international search (name of data base and, where practicable, search terms used)

: CNTXT; CJFD; DWPI; ENTXTC; WPABS; CNKI; himmpat; 百度学术, BAIDU SCHOLAR; ISI web of science: 金发科技, 珠海万通, 杨汇鑫, 黄险波, 麦杰鸿, 姜苏俊, 蒋智强, 阎昆, 李建伟, 徐显骏, 聚酰胺, 硅灰石, 色粉, 色粒, 颜料, 炭黑, 碳黑, LED, 白度, 反射率, 半峰宽, 结晶峰, 半高宽, 粒径, polyamide, PA, PA10T, PA10T/10I, PA10T/6T, PA10T/66, PA10T/1010, PA10T/610, PA10T/612, PA10T/12T, wollastonite, carbon black, paint, whiteness, reflectivity, crystal peak, full width at half maximum, FWHM, particle size

**C. DOCUMENTS CONSIDERED TO BE RELEVANT**

| Category* | Citation of document, with indication, where appropriate, of the relevant passages | Relevant to claim No. |
| --- | --- | --- |
| PX | WO 2021204600 A1 (BASF SE et al.) 14 October 2021 (2021-10-14) description, paragraphs 11-19 and 36-91, and embodiments E1-E2, C3 and C7 | 1-10 |
| A | CN 103890039 A (SOLVAY SPECIALTY POLYMERS USA) 25 June 2014 (2014-06-25) claims 1 and 6-7, and description, paragraphs 15 and 37 | 1-10 |
| A | CN 104804414 A (KINGFA SCIENCE AND TECHNOLOGY CO., LTD.) 29 July 2015 (2015-07-29) description, paragraphs 8-18 and 26 | 1-10 |
| A | CN 112358610 A (KINGFA SCIENCE AND TECHNOLOGY CO., LTD. et al.) 12 February 2021 (2021-02-12) | 1-10 |
| A | CN 110294842 A (KINGFA SCIENCE AND TECHNOLOGY CO., LTD. et al.) 01 October 2019 (2019-10-01) entire document | 1-10 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 November 2022** | **22 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/118970** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106336659 A (JIANG MEN DE ZHONG TAI ENGINEERING PLASTICS TECHNOLOGY CO., LTD.) 18 January 2017 (2017-01-18)<br>entire document | 1-10 |
| A | CN 106117549 A (ZHUHAI WANTONG SPECIAL ENGINEERING PLASTIC CO., LTD.) 16 November 2016 (2016-11-16)<br>entire document | 1-10 |
| A | CN 103911000 A (CHEIL INDUSTRIES INC.) 09 July 2014 (2014-07-09)<br>entire document | 1-10 |
| A | JP 2001131408 A (ASAHI KASEI CORP.) 15 May 2001 (2001-05-15)<br>entire document | 1-10 |
| A | US 2019002638 A1 (KINGFA SCIENCE & TECHNOLOGY CO., LTD. et al.) 03 January 2019 (2019-01-03)<br>entire document | 1-10 |
| A | CN 108383996 A (KINGFA SCIENCE AND TECHNOLOGY CO., LTD. et al.) 10 August 2018 (2018-08-10)<br>entire document | 1-10 |

Form PCT/ISA/210 (second sheet) (January 2015)

INTERNATIONAL SEARCH REPORT

Information on patent family members

International application No.

**PCT/CN2022/118970**

| Patent document cited in search report | | | Publication date (day/month/year) | Patent family member(s) | | | Publication date (day/month/year) |
|---|---|---|---|---|---|---|---|
| WO | 2021204600 | A1 | 14 October 2021 | TW | 202144495 | A | 01 December 2021 |
| CN | 103890039 | A | 25 June 2014 | EP | 2744846 | A1 | 25 June 2014 |
| | | | | KR | 20140058635 | A | 14 May 2014 |
| | | | | US | 2014221546 | A1 | 07 August 2014 |
| | | | | JP | 2014521822 | A | 28 August 2014 |
| | | | | WO | 2013026780 | A1 | 28 February 2013 |
| CN | 104804414 | A | 29 July 2015 | CN | 104804414 | B | 16 February 2018 |
| CN | 112358610 | A | 12 February 2021 | | None | | |
| CN | 110294842 | A | 01 October 2019 | WO | 2020238440 | A1 | 03 December 2020 |
| CN | 106336659 | A | 18 January 2017 | | None | | |
| CN | 106117549 | A | 16 November 2016 | CN | 106117549 | B | 22 January 2019 |
| CN | 103911000 | A | 09 July 2014 | DE | 102013226703 | A1 | 03 July 2014 |
| | | | | KR | 20140087663 | A | 09 July 2014 |
| | | | | US | 2014187662 | A1 | 03 July 2014 |
| | | | | CN | 103911000 | B | 09 July 2014 |
| JP | 2001131408 | A | 15 May 2001 | | None | | |
| US | 2019002638 | A1 | 03 January 2019 | EP | 3375821 | A1 | 19 September 2018 |
| | | | | JP | 2019507196 | A | 14 March 2019 |
| | | | | WO | 2018133295 | A1 | 26 July 2018 |
| | | | | CN | 107057343 | A | 18 August 2017 |
| | | | | KR | 20180100078 | A | 07 September 2018 |
| CN | 108383996 | A | 10 August 2018 | WO | 2019137303 | A1 | 18 July 2019 |
| | | | | CN | 108383996 | B | 30 October 2020 |

Form PCT/ISA/210 (patent family annex) (January 2015)